**Europäisches Patentamt**

(19) **European Patent Office**

**Office européen des brevets**

(11) Publication number: **0 033 625**

**A1**

(12) # EUROPEAN PATENT APPLICATION

(21) Application number: **81300338.1**

(22) Date of filing: **26.01.81**

(51) Int. Cl.³: **B 32 B 15/01**
**A 44 C 21/00**

(30) Priority: **25.01.80 US 114310**

(43) Date of publication of application:
**12.08.81 Bulletin 81/32**

(84) Designated Contracting States:
**DE FR GB**

(71) Applicant: **Inco Research & Development Center, Inc.**
**Sterling Forest**
**Suffern New York 10901(US)**

(72) Inventor: **Peterson, Walter Adrian**
**132 Hamilton Road**
**Ridgewood New Jersey 07450(US)**

(72) Inventor: **Travis, Jonathan Adriel**
**15 Pierce Avenue**
**Oak Ridge New Jersey 07438(US)**

(72) Inventor: **Badia, Frank Arthur**
**13 West Circle**
**Ringwood New Jersey 07456(US)**

(74) Representative: **Greenstreet, Cyril Henry et al,**
**Thames House (Fifth floor) Millbank**
**London SW1P 4QF(GB)**

(54) **Metal laminates, process for production thereof and coins made therefrom.**

(57) A metal laminate particularly suitable for the production of coins comprises a core layer (11) of nickel, iron or a ferromagnetic alloy containing nickel or iron, two layers (12, 13) of copper cladding the core layer, and two outer sheathing layers (14, 15) cladding the copper layers and made from a copper alloy containing from 0.5 to 10% aluminium and from 0 to 9.5% nickel. The laminates may be made by bonding the metal layers by hot or cold rolling.

Fig.1

EP 0 033 625 A1

- 1 -

### Metal Laminates, Process for the production thereof, and coins made therefrom

This invention relates to metal laminates and methods of producing them.  More particularly, it is concerned with laminates for use in the manufacture of gold-coloured coins, and other products, having magnetic properties, and with coins made from such laminates.

Materials used for coinage should be difficult to counterfeit, have an attractive colour, and resist tarnishing and wear under normal handling conditions. In addition, their magnetic properties are preferably such that coins may be recognised by vending or other coin-operated machines.  They should also have good enough hot and/or cold workability for ease of manufacture of the coins, coupled with a final hardness which will provide the desired abrasion resistance in the finished coins. Finally, the material must be cheap enough for the cost of a finished coin to be less than its face value.

It is so difficult to satisfy all these requirements with a single alloy that composite materials are increasingly being used.  These may, for example, have a core chosen for its magnetic properties, or simply its cheapness, and an outer cladding of an alloy having the desired colour and resistance to tarnish and abrasion. It is also important for scrap of the composite material to have a composition suitable for remelting to produce useful commercial alloys.

According to the present invention a composite material suitable for the production of coins consists of a metal    laminate having a core layer of nickel, iron or a ferromagnetic alloy containing nickel or iron, clad on each face with an intermediate layer of copper and outer sheathing layer of an alloy which comprises from 0.5 to 10 % Al, and from 0 to 9.5% Ni, the balance apart from incidental elements and impurities being Cu in an amount of at least 85%.

Unless otherwise specified, all percentage compositions in this specification are by weight.

Laminates according to the invention may be produced by bonding the five layers together by rolling. This may be done in one or more stages, and the roll-bonding may be performed either hot or cold.

To effect bonding by hot-rolling, metal sheets to form the various layers are formed into a pack and the pack is rolled in the temperature range 650-1000$^{\circ}$C so as to reduce the thickness of the pack, in the or each bonding pass, by an amount depending on the rolling temperature and increasing from at least 25% for a rolling temperature of 650$^{\circ}$C to at least 40% for a rolling temperature of 1000$^{\circ}$C, but not more than 65%, and preferably less than 60%, per pass.

To keep the sheets in position relative to each other, at least portions of the edges of the pack should be welded together before rolling. It is preferred to weld the pack all around; if only partial welding is used, the pack should be maintained in an inert or reducing atmosphere when hot.

It is important that when more than one hot-rolling pass is used, the minimum reduction in thickness is achieved in each pass. Thus it has been found that when a pack was rolled to a 50% reduction in thickness at 1000$^{\circ}$C in a first pass to achieve bonding, further hot rolling with a thickness reduction of only 17-24% per pass led to delamination.

Excessive reduction in any hot-rolling pass may cause extrusion of one or more layers of the pack and failure to bond. Thus a reduction of 67% at 1000$^{\circ}$C caused a nickel core layer to burst through the welded edges of the pack and be extruded.

After bonding by hot-rolling, the laminate may be cold-rolled to the desired final gauge.

To bond a pack of metal sheets by cold rolling, the pack thickness should be reduced by at least 65% in the or each pass. The bonded pack is then annealed, preferably by heating at from 650 to 1000°C for at least 5 minutes, after which it can be further cold-rolled to the desired final gauge with lesser thickness reductions per roll pass.

In view of the very high pressure needed to achieve a 65% reduction in a cold-rolling pass, it can be inconvenient to cold-bond five separate layers simultaneously, and cold bonding may be effected in two or more stages. Thus a sheet of the material of the outer sheathing layer (a copper-aluminium alloy) may first be bonded to a sheet of copper for the intermediate layer by cold rolling and, after annealing, a sheet of the resulting laminate may be bonded to each face of a sheet of the material of the core layer by cold-rolling.

Alternatively, a sheet of copper may first be bonded to each face of a sheet of the core material by cold-rolling a pack of the three sheets and, after annealing, a sheet of the copper-aluminium alloy outer sheathing material may be bonded to each face of the resulting laminate by cold-rolling.

When cold-bonding is effected in two or more stages in either of these ways, it is important that the thickness reduction in each cold-bonding pass is at least 65%.

The material of the core layer, which must be ferro-magnetic to give coins recognisable magnetic properties, may be nickel, an alloy consisting primarily of nickel, or alternatively iron or steel. An iron-based material may, of course, corrode at the coin edge where the core is exposed after lengthy storage in a humid environment. This corrosion may be tolerable as it will be confined to a relatively small area of the coin and normal handling will wear away any corrosion products. However, it is generally preferable to remove the possibility of corrosion by using a core of nickel.

Both nickel used as core and the copper used as intermediate layers may be of commercially pure grades.

Typically, the intermediate layers of copper will be very thin, for example from 1% to 6% of the thickness of the laminate. The core thickness may be in the range from 3.5 to 85% of the laminate thickness and each sheathing layer may have a thickness representing from 5 to 45% of the laminate thickness.

The precise composition of the sheathing layer alloy should be selected in accordance with the specific properties required. While many copper-base alloys containing not more than 70% in total of nickel and aluminium are suitable for coinage use, it is generally preferred that the sum of the nickel and aluminium contents be not greater than 9% and that the nickel content be less than 5%. Examples of suitable sheathing alloys include those having the nominal compositions: Cu-8%Al, Cu-2%Al-6%Ni, and Cu-6%Al-2%Ni. The last mentioned alloy is particularly preferred inasmuch as it has proven characteristics of workability and tarnish resistance. This alloy has been used, for example, by the French and Danish governments for coins of non-laminated structure.

The use of intermediate copper layers has been found to be essential to the successful production of laminates having a ferromagnetic core and an aluminium containing sheathing alloy. Attempts to make three-layered laminates in which no copper intermediate layer was used proved unsuccessful in that delamination was observed after hot or cold rolling. The inability to achieve a good bond between the core and sheathing alloy is believed to be a result of formation of brittle intermetallic compounds of nickel and aluminium at the bonding interfaces. A copper layer between the core and the sheathing alloy has been found to enable excellent bonding to be achieved. To provide adequate protection from formation of the undesired intermetallic compounds, the copper layer used should be such as to result in a minimum thickness of the order of 10 μm in the laminate as used.

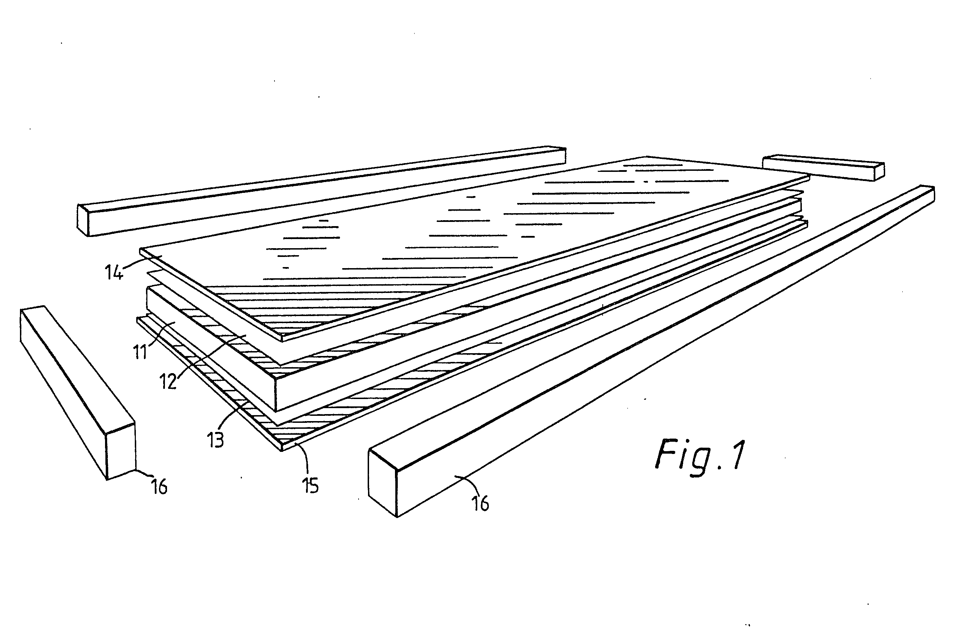

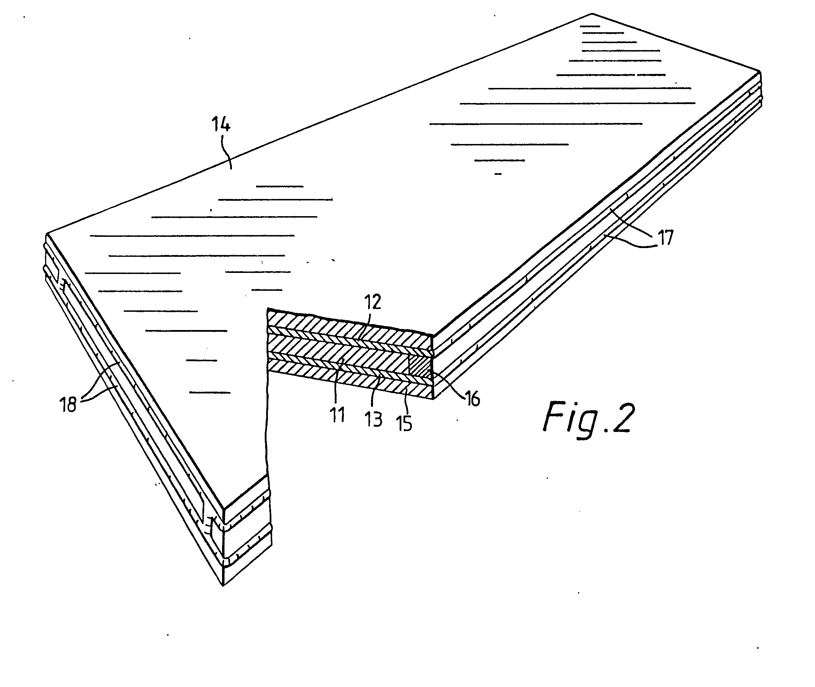

The invention will now be described in more detail with reference to the following examples and to the accompanying drawing in which Figures 1 and 2 show, schematically, the construction of a pack used to form a laminate of the present invention, before and after lamination respectively.

Example 1

A Cu-Al-Ni alloy was prepared for use as sheathing alloy by induction melting in air, 0.003% phosphorus being added as deoxidant. Chemical analysis showed that the alloy contained 5.6% Al, 2.7% Ni and 0.002% P, the balance being copper. Ingots of the alloy were hot rolled to 10 mm plate, ground and then cold rolled to produce sheets having a thickness in the range from 0.6 to 6 mm.

The core material was commercially air melted nickel stock and contained 0.01% C, 0.25% Mn, 0.06% Si, 0.18% Fe, 0.10% Cu.

Commercially obtained 1.3 mm thick sheet copper was used for the intermediate layers, in some cases cold-rolled to a thinner gauge.

A five-layer pack was prepared by stacking in the appropriate manner strips of material which were about 60 mm long and 30 cm wide. The strips consisted of a 21.3 mm thick nickel strip, 11, flanked by copper layers, 12 and 13, each 1.3 mm thick, and sheathing layers, 14 and 15, each 3.8 cm thick. The sheathing layers had slightly greater surface area than the inner layers and, in the resulting overlap, strips of the sheathing alloy were placed as a dam, 16, all round the pack. The pack was then gas tungsten-arc welded around its periphery using MONEL (Registered Trade Mark) Filler Metal 67. The welds are shown at 17. A pair of vent holes, 18, were drilled at one end of the pack to permit equalization of external and internal air pressue during heat-up.

The pack was soaked at 1000°C for 1½ hours and then

fed at that temperature to a rolling mill in which the thickness of the pack was reduced in 6 passes by 37.5, 33.3, 30, 29, 40 and 35% respectively. The resulting laminate was allowed to cool and was then examined to ascertain the effectiveness of the bonding. Both visual examination and destructive testing with a hammer and chisel showed that satisfactory bonding had been achieved.

The laminate was further treated as follows. The edges were sheared and the surface was cleaned by abrasive grinding. The laminate was then cold rolled to strip to achieve a total reduction of 73% in its thickness in 11 passes. The cold rolling was performed without any annealing. Inspection of the cold rolled strip revealed no delamination. Blanks were punched from the strip and rimmed. The rimmed blanks were then annealed for about 30 minutes at 760°C in an atmosphere of cracked ammonia and embossed under a pressure of 825 MPa to produce coins having a good quality and appearance.

The cold rolled strip had a 0.78 mm thick core, 0.05 mm thick intermediate copper layers and 0.20 mm thick sheathing layers. Scrap from the punching of blanks from this strip contained, when melted, about 62% nickel, 36% copper and 2% aluminium. Such a melt is well suited for the preparation of known commercial alloys such as those containing about 70% nickel and 30% copper, e.g. MONEL (Registered Trade Mark) alloy 400.

### Example 2

The method described in Example 1 was used to produce coins from laminates in which the sheathing alloy contained varying amounts of nickel and aluminium, the sum of the aluminium and nickel contents being less than 10%. The coins were subjected to tests simulating pocket storage and handling and were exposed above the surface of an artificial sweat solution. While many of the coins were found to exhibit acceptable behaviour in all these tests, those containing at least 2% Al showed particularly good performance in wear tests. As an additional evaluation of the quality of the material, the laminated strip was subjected to bend testing. The strip was found to withstand a 180$^{\circ}$ bend test without any sign of delamination.

The importance of the hot-rolling conditions is demonstrated by the following series of tests. For the purpose of these tests only three layers were used, i.e. one each of nickel, copper and Cu-6%Al-2%Ni alloy. The packs were prepared and bonded by the hot-rolling procedure described above, with varying temperatures and thickness reductions. In each case the starting pack consisted of a 12.1 mm thick nickel sheet, a 1.3 mm thick copper sheet and a 3.8 mm thick sheathing alloy sheet. The packs were soaked for one hour at a temperature between 650$^{\circ}$C and 1000$^{\circ}$C and subsequently hot-rolled to achieve single pass reductions ranging from 14 to 44%. The hot bonded strip was examined visually and destructively tested by hammer and chisel, and the results are shown in Table I.

TABLE I

| Soaking Temp ($^{\circ}$C) | Single Pass Reduction (%) | Bond Quality | |
|---|---|---|---|
| | | Visual Examination | Chisel Test |
| 650 | 41.9 | S | S |
| 650 | 28.5 | S | S |
| 650 | 19.0 | U | - |
| 650 | 14.1 | U | - |
| 760 | 43.7 | S | S |
| 760 | 30.8 | S | S |
| 760 | 16.0 | S | U* |
| 870 | 43.8 | S | S |
| 870 | 28.0 | S | U |
| 870 | 15.1 | U | - |
| 1000 | 44.3 | S | S |
| 1000 | 40.0 | S | S |
| 1000 | 31.4 | S | U |
| 1000 | 17.8 | S | U |

S = satisfactory quality, no delamination observed.

U = unacceptable quality, delamination observed or induced by hammer and chisel.

* = quality was borderline in that delamination could only be induced by considerable effort.

The results show that in preparing laminates of the invention by hot bonding a minimum reduction in thickness per pass should be achieved to ensure good bonding. As stated earlier, this minimum, which is dependent on the rolling temperature, is needed not only during the first pass but also during subsequent passes of the hot-rolling operation.

### Example 3

This is an example of bonding by cold-rolling.

Two five layer packs were prepared using a 6.35 mm thick nickel core, 0.13 mm thick copper intermediate layers and 0.5 mm thick Cu-6%Al-2%Ni sheathing layers. The surfaces of the nickel core and the inner surfaces of the Cu-6%Al-2%Ni sheathing layers were power wire brushed just prior to rolling using a stainless steel brush. The first 7.6 mm thick pack was cold-rolled to reduce its thickness by 72% in a single pass, giving a strip of about 2.2 mm thickness. This strip was annealed at 760°C for 15 minutes and then cold-rolled with a 34% reduction in 3 passes to a final thickness of 1.4 mm. Three out of four rimmed blanks produced from this strip were satisfactory while the fourth showed a small amount of delamination.

The second pack was cold-rolled with a 78% reduction in a single pass to a 1.65 mm thickness. After annealing for 17 minutes at 760°C, the strip was given a further 14% reduction in thickness by cold-rolling it to 1.4 mm in two passes. Samples from the two pieces of strip were bent through 180° without any sign of delamination.

### Example 4

This is an example of cold roll bonding using a two-step procedure. First a layer of copper was bonded to a layer of Cu-6%Al-2%Ni and subsequently two layers of this composite were bonded to a nickel core. The mating surfaces of a 1.7 mm thick Cu-6%Al-2%Ni sheet and 0.43 mm thick copper sheet were power wire brushed just prior to rolling,

using a stainless steel wire brush.    The 5 cm wide by 10 cm long pack was cold rolled with a thickness reduction of 67% in a single pass to provide a two-layer laminate of about 0.7 mm thickness.    Excellent bonding was obtained in this operation and microscopic examination showed that the copper layer was 0.11 mm thick and the Cu-6%Al-2%Ni layer was 0.58 mm thick.    After annealing for 30 minutes at 760°C, the copper faces of two pieces cut from this laminate were power wire brushed, using a stainless steel wire brush.    These pieces, which were 3.8 cm wide by 10.2 cm long, were assembled as a pack about a 4.4 mm thick nickel core.    The copper surfaces of the two layer laminate were in contact with the nickel core, which had also been power wire brushed on both sides.    This 5.8 mm thick pack was cold rolled in one pass to 1.8 mm thick strip (reduction in thickness 69%).    The strip was annealed for 30 minutes at 760°C and cold rolled to give a 22% reduction in thickness, the final thickness being 1.4 mm. Ten coin blanks were punched from this strip and subjected to rimming.    Following this the blanks were annealed for 30 minutes at 760°C in an atmosphere of cracked ammonia. The blanks were embossed under a pressure of 825 MPa to produce coins of good quality in all respects.    Samples of the annealed strip were bent about 180° and flattened and microscopic examination showed no delamination or other defects.    The Cu-6%Al-2%Ni layers were 0.152 mm thick, the copper intermediate layers were 0.0254 mm thick, and the nickel core was 1.067 mm thick.

In another test to evaluate bond quality, 60 and 64 mm diameter blanks were cut from a 0.76 mm thick laminate of this invention which had been previously annealed at 815°C for 30 minutes.    These blanks were subjected to a deep drawing test in which they were pushed by a 32 mm diameter mandrel through a 33.4 mm diameter die to provide cups about 20 and 25 mm high respectively.    There was no evidence of delamination or tearing in these test pieces. This provided further evidence of the quality of the metallurgical bond obtained in laminates of this invention and showed that the laminates may be deep drawn.

The processes of the invention have been used to prepare laminates having an overall thickness of 1.4 mm wherein the thickness ratio of the core to the cladding (single layer) ranged from 1:3 to 9:1, from which coins having a wide range of magnetic properties could be made.

It will be understood by those skilled in the art that laminates of this invention may be used for applications other than coinage, for example cookware. The combination of good tarnish resistance and the thermal properties of the copper layers provides a material well suited for pots and pans.

## Claims

1. A metal laminate comprising a core layer (11) of nickel, iron or ferromagnetic alloy containing nickel or iron, clad on each face with an intermediate layer (12,13) of copper and an outer sheathing layer (14, 15) of an alloy which comprises, by weight, from 0.5 to 10% Al and from 0 to 9.5% Ni, the balance, apart from incidental elements and impurities, being Cu in an amount of at least 85%.

2. A laminate according to claim 1 wherein the core layer is nickel.

3. A laminate according to claim 1 or 2 wherein the sum of the nickel and aluminium contents of the sheathing alloy does not exceed 9%.

4. A laminate according to any preceding claim, wherein the nickel content of the sheathing alloy is less than 5%.

5. A laminate according to any preceding claim, wherein the sheathing alloy comprises 6% Al and 2% Ni, the balance, apart from incidental elements and impurities, being copper.

6. Process of producing a laminate according to any preceding claim, characterised in that the five layers are bonded to one another by rolling.

7. Process according to claim 6, characterised in that the bonding is effected by hot rolling a pack of metal sheets in the temperature range 650-1000°C so as to reduce the thickness of the pack, in the or each bonding pass, by an amount depending on the rolling temperature and increasing from at least 25% for a rolling temperature of 650°C to at least 40% for a rolling temperature of 1000°C, but not exceeding 65% in any one pass.

8. Process according to claim 6, characterised in that the bonding is effected by cold rolling a pack of metal sheets to reduce the thickness of the pack by at least 65% in the or each bonding pass.

9.      Process according to claim 8 , characterised in that sheets of the material of the outer sheathing layer (14, 15) and the intermediate layer (12, 13) are first bonded by cold rolling, the resulting laminate is annealed, and a sheet of the annealed laminate is bonded to each face of a sheet of the core material (11) by cold rolling, each bonding pass reducing the thickness of the pack by at least 65%.

10.      Process according to claim 8 , characterised in that a sheet of the material of the intermediate layer (12, 13) is bonded to each face of a sheet of the core material (11) by cold rolling a pack of the three sheets, the resulting laminate is annealed, and a sheet of the material of the outer sheathing material (14, 15) is bonded to each face of the annealed laminate by cold-rolling, each bonding pass reducing the thickness of the pack by at least 65%.

11.      A process according to to any one of claims 8 to 10, characterised in that the cold-rolled 5-layer laminate is annealed at 600-1000$^{\circ}$C for at least 5 minutes and then cold-rolled to the desired guage.

14

11

12

13

15

16

16

*Fig.1*

Fig.2

0033625

Application number

EP 81 30 0338

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | B 32 B 15/01 |
| | US - A - 3 516 804 (R.H. TRAPP) | 1,6 | A 44 C 21/00 |
| | * Example II; column 6, lines 61-74 and columns 8 and 9 * | | |
| | --- | | |
| | US - A - 3 634 890 (H. CONRADT et al.) | 1,2 | |
| | * Claim 2 * | | |
| | --- | | |
| A | FR - A - 2 157 993 (TEXAS INSTRUMENTS INC.) | 1 | |
| | * Claim 1 and page 5, lines 21-38 * & US - A - 3 750 253 | | TECHNICAL FIELDS SEARCHED (Int. Cl.³) |
| | --- | | B 22 B 15/01 |
| A | GB - A - 19021/1913 (THE BRITISH THOMSON-HOUSTON Co.) | 1 | A 44 C 21/00 C 22 C 9/06 B 23 K 20/22 |
| | * Claim 2 * | | |
| | --- | | |
| A | US - A - 3 407 050 (R.H. TRAPP) | 1 | |
| | * Claims 2,3 and 10 * | | |
| | --- | | |
| A | US - A - 1 496 269 (ITYRO IYTAKA) | 1 | |
| | * Claim * | | |
| | --- | | CATEGORY OF CITED DOCUMENTS |
| A | GB - A - 425 547 (H.W. BROWNSDON) | 1 | X: particularly relevant |
| | * Page 3, lines 23 and 24 * | | A: technological background O: non-written disclosure P: intermediate document T: theory or principle underlying the invention E: conflicting application D: document cited in the application L: citation for other reasons |
| | --------- | | &: member of the same patent family, corresponding document |

| The present search report has been drawn up for all claims | | |
|---|---|---|
| Place of search The Hague | Date of completion of the search 29.04.1981 | Examiner FISCHER |

EPO Form 1503.1 06.78